# EUROPEAN PATENT APPLICATION

(11) **EP 1 795 251 A1**
(43) Date of publication of application: **13.06.2007**
(21) Application number: 06256257.4
(22) Date of filing: 08.12.2006
(51) Int. Cl.: B01D 51/08

(54) **Pulse detonation particulate agglomerator**

(30) Priority: 12.12.2005 US 301657
(71) Applicant: UNITED TECHNOLOGIES CORPORATION, Hartford, Connecticut 06101 (US)
(72) Inventor: Chenevert, Blacke C., Redmond, WA 98052 (US)
(74) Representative: Leckey, David Herbert

(57) **Abstract**

The burning of fuel (e.g., coal) generates an exhaust flow containing particles. The flow is passed through a pulsed combustion agglomerator (120). The agglomerator (120) is cyclically operated by introducing a fuel and oxidizer charge to at least one conduit (122), initiating combustion of the charge. The combustion generates a shock wave to which the flow is exposed causing partial agglomeration of the particles. The flow is passed through a particle removal system (104) and exhausted.

## Description

### BACKGROUND OF THE INVENTION

The invention relates to coal-fired industrial equipment. More particularly, the invention relates to the control of particulate emissions from coal-fired industrial equipment such as pulverized coal-fired utility boilers.

Particulate emissions from coal-fired industrial equipment have plagued industry for centuries. Among well developed technologies for removing particulate are bag houses, cyclonic separators, and electrostatic precipitators. One area of recent attention is acoustic agglomeration. U.S. Patent 6,749,666 of Meegan, Jr. identifies use of a modulated acoustic field to induce particulate agglomeration. A device is used to generate a modulated acoustic field of a desired sound pressure level and frequency. The sound waves cause small particulate to agglomerate to form larger particulate that is easier to capture with conventional equipment.

### SUMMARY OF THE INVENTION

The burning of fuel (e.g., coal) in industrial equipment generates an exhaust flow containing airborne particulate. The flow is passed through a pulsed detonation particulate agglomerator. The agglomerator is cyclically operated by introducing a fuel and oxidizer charge to at least one conduit and initiating combustion of the charge. The combustion generates a shock wave to which the flow is exposed causing agglomeration of the particulate. The flow is processed through conventional particulate removal equipment and exhausted.

The details of one or more embodiments of the invention are set forth in the accompanying drawings and the description below. Other features and advantages of the invention will be apparent from the description and drawings, and from the claims.

### BRIEF DESCRIPTION OF THE DRAWINGS

FIG. 1 is a partially schematic view of a coal-fired boiler system.
FIG. 2 is a transverse sectional view of a particulate agglomeration system of the boiler system of FIG. 1.
FIG. 3 is a longitudinal sectional view of the particulate agglomeration system of FIG. 2.
FIG. 4 is a schematic view of particulate before agglomeration.
FIG. 5 is a view of particulate during agglomeration.
FIG. 6 is a view of particulate after agglomeration.

Like reference numbers and designations in the various drawings indicate like elements.

### DETAILED DESCRIPTION

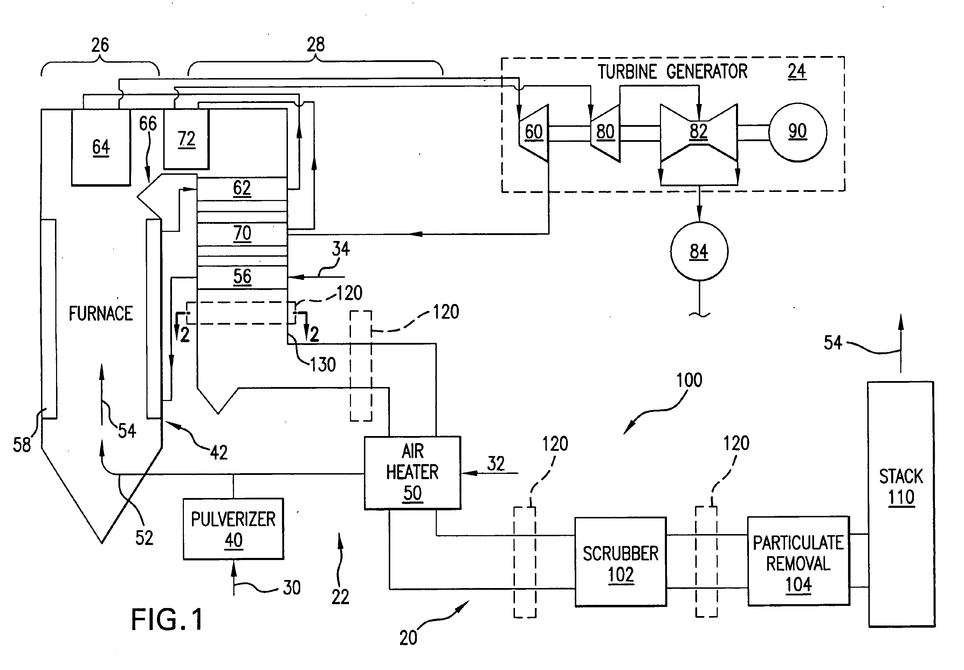

FIG. 1 shows a schematic view of a pulverized coal-fired electric power plant 20. The exemplary plant may be an electrical power plant having a steam generator 22 providing steam to a steam turbine electrical generator unit 24. Along a combustion flowpath, the steam generator 22 has an upstream radiant (furnace) zone 26 followed by a downstream convective (backpass) zone 28. The steam generator 22 receives input flows of coal 30, air 32, and water 34.

The coal 30 passes through a pulverizer system 40. The air flow 32 passes through an air heater 50 (discussed below) at a downstream end of the backpass 28. The backpass heat exchangers may comprise vertical/streamwise or horizontal/transverse tube arrays. The air enters the furnace 42 as a preheated flow 52 partially including entrained pulverized coal 44. The furnace serves as a combustor combusting the coal and air mixture. A combustion flow 54 passes downstream along the combustion flowpath.

The water flow 34 enters the convective zone 28 where it is preheated in an economizer 56 before entering the vertical walls (water walls-typically vertically extending tube arrays) 58 of the furnace 42. Heat exchange from the combustion products 54 boils the water to produce steam. Downstream along both the gas/combustion products flowpath and water/steam flowpath, the steam is superheated to high temperature and, in turn, delivered to a high pressure turbine 60. Exemplary superheating occurs in a two-stage process, first in a primary superheater 62 across the convective zone upstream of the economizer 56 and then in a pendant secondary superheater 64 on the radiant zone. In the radiant zone 26, flow is primarily upward and, in the convective zone, primarily downward. The two zones are separated by a bull nose 66 adjacent the pendant heat exchanger(s).

Steam from the high pressure turbine 60 continues along the water/steam flowpath and returns to the boiler to be reheated. Exemplary reheating is in a two-stage process, with a primary reheating (e.g., in a heat exchanger 70 across the convective zone between the primary superheater 62 and economizer 56) and a secondary reheating (e.g., in a pendant reheater 72 spanning the radiant and convective zones). Thereafter, the re-heated steam is delivered to an intermediate pressure turbine 80.

Steam exiting the intermediate pressure turbine 80 is directed to a low pressure turbine 82. Steam (and optionally water) exiting low pressure turbine 82 may proceed to a condenser 84 for correction and processing (e.g., to return as the stream 34). Energy extracted by the turbines drives an electrical generator 90 to produce electrical power.

After heating the water in the backpass region, the flow 54 heats the incoming air in the air heater 50 and then may proceed to a pollution control system 100. The exemplary system 100 includes an upstream chemical scrubber 102 and a downstream particulate removal device 104 (e.g., a bag house or electrostatic precipitator). Thereafter, the combustion products may pass through a stack 110 for discharge to atmosphere.

As so-far described, the system is illustrative of just one of a variety of plant configurations to which the present invention may be applied. According to the present invention, one or more particulate agglomeration systems 120 may be located along the air/combustion products flowpath. The system(s) 120 may advantageously be located within the backpass region, within the pollution control system 100, or in between those two.

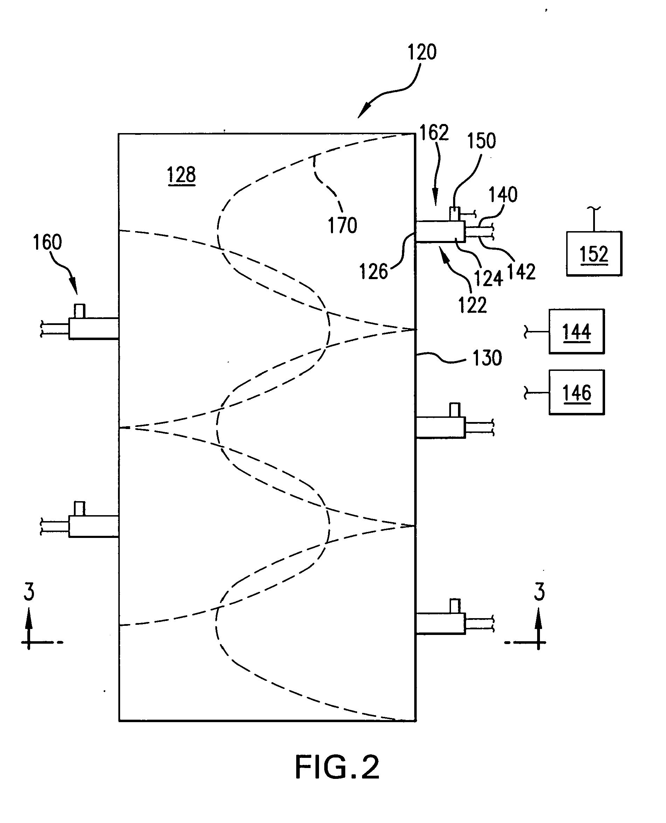

FIG. 2 shows an exemplary agglomeration system 120 positioned along the combustion products flowpath away from boiler tubes or other heat exchange elements. The exemplary system 120 includes a plurality of pulsed combustion devices 122. Each device 122 has a conduit 124 having an outlet 126 at one end in communication with the interior 128 of the flue duct 130. The conduit 124 may include one or more inlets for receiving fuel and oxidizer. FIG. 2 shows exemplary fuel and oxidizer lines 140 and 142 coupled to common fuel and oxidizer sources 144 and 146. Each device further has an ignitor coupled to the conduit 124 to ignite the fuel and oxidizer. The exemplary devices 122 further include control modules 150 which may be connected to a central control system 152. Additional structural and operational details may be similar to those of pulsed combustion cleaning apparatus such as shown in US Pregrant Patent Publications 2005-0112516 and US 2005-0199743, the disclosures of which are incorporated by reference herein as if set forth at length. Unlike the cleaning apparatus, operation as a particulate agglomeration apparatus would be essentially continuous rather than intermittent. Conduits 124 may be operated with an air purge before each charge introduction. The fuel may consist in majority part, by mass, of fuel selected from the group consisting of hydrogen, hydrocarbon fuels, and their mixtures. The oxidizer may consist essentially of air. The combustion may have lengths of 0.5-4m and cross-sectional areas of 5-150cm².

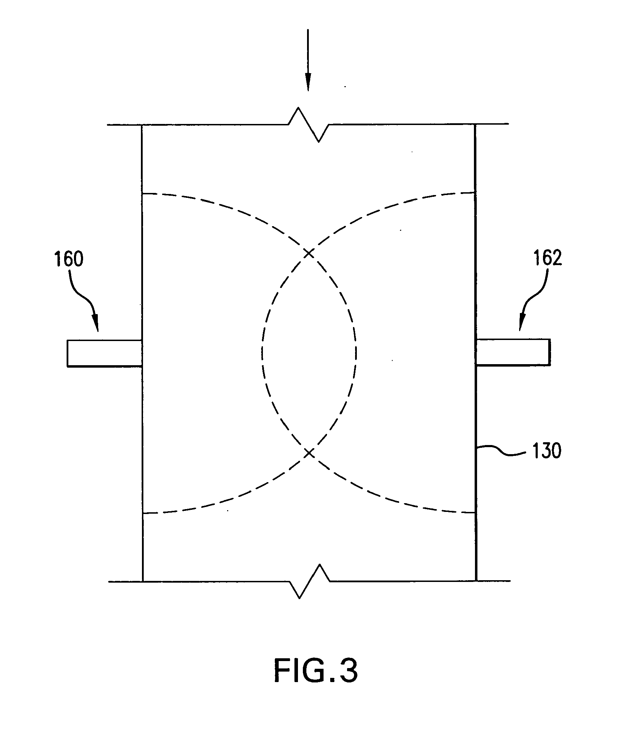

The exemplary duct 130 is rectangular in transverse section. Along each of the two longer sides is an associated group 160 and 162 of the devices 122. FIG. 3 shows the two groups at a common streamwise position along the duct 130. Other configurations are possible.

The control system 152 may operate the devices 122 to repeatedly combust charges of the fuel and oxidizer. Exemplary combustion includes detonation producing associated shock waves 170. FIG. 2 shows the two groups 160 and 162 as being out of phase to maximize effective coverage.

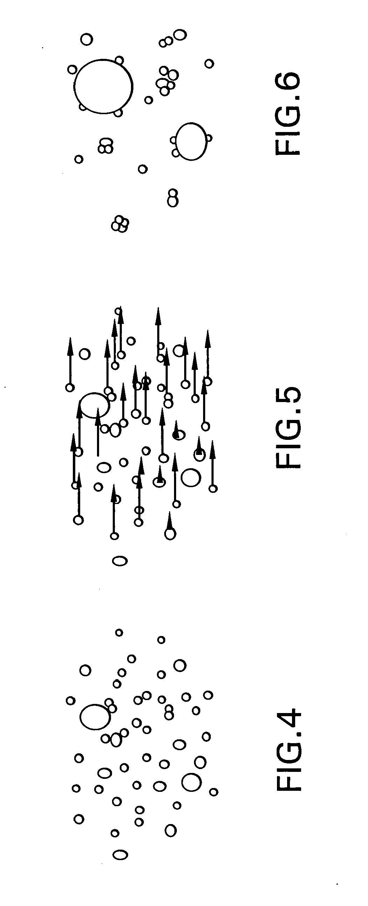

As the shock waves propagate through the flue gas, they induce particle agglomeration, reducing the number density of smaller particulate and thereby increasing the effectiveness of downstream particulate removal equipment 104. FIGS. 4-6 show the effect of pressure waves on particle distribution. FIG. 4 shows an exemplary distribution including relatively large and relatively small particles, prior to arrival of the shock wave. As the wave passes, smaller particles are preferentially accelerated (FIG. 5) due to their low mass to cross-sectional area ratio. This may cause these particles to collide with relatively large particles or other relatively small particles. Some of these collisions result in agglomeration of particles, thereby forming yet larger particles.

The formation of larger particles may be by any of several mechanisms. It may include purely mechanical bonding of solid particles to each other (e.g., by the interlinking of the irregular surfaces of adjacent particles). It may include liquid-solid bonding (e.g., where a liquid droplet sticks to a solid particle such as by surface tension/wetting). It may include liquid-liquid bonding (e.g., where the droplets merge to relax surface tension and, optionally, internally mix to form a uniform structure).

FIG. 6 shows a resultant distribution wherein characteristic particle size has been substantially increased by the above mechanisms and will facilitate removal in the pollution control system 100.

The exemplary devices 122 may be fired simultaneously (e.g., repetitively and without interruption while the furnace is in operation or sequentially). A given cycle will induce particulate agglomeration within a slug of the flue gas passing through the system 120. The cycle timing may be selected to just allow a slug refresh or allow only a partial refresh. Exemplary timing is in excess of 1Hz, more particularly in excess of 1.5 Hz, more particularly in the 1.5-10 or 2-6 Hz ranges. Alternatively, there may be groups of devices 122 at multiple streamwise positions along the combustion flowpath (either adjacent positions or positions separated by other components). The timing of the firing of the groups at different streamwise positions could be selected so that a given slug is exposed to at least one set of shock waves from such devices. For example, this may be required if needed refresh times of the devices 122 exceed the desired cycle interval for a single streamwise location. Alternatively such high device minimum refresh times might be accommodated by replacing the individual devices with pairs or clusters wherein the individual devices of each pair or cluster are sequentially fired.

Particular physical and operational parameters will depend on the desired characteristics of emissions control. For coal-powered plants, this may partially be influenced by the nature of the particular coal being burned. For example, it may be desirable to remove particulate in general, on the one hand while, on the other hand, it may be desirable to remove particulate as a tool to remove one or more specific chemicals in the particulate. For example, some contaminants such as mercury tend to adsorb onto or amalgamate with other particles (e.g., fly ash). Specific adsorption (mass of pollutant adsorbed relative to particle mass) will be highest on smaller particles which have higher specific surface areas. It may be desirable to position the system 120 relatively downstream to maximize the available time for such adsorption. This may be balanced against effectiveness of agglomeration. Agglomeration effectiveness might be higher upstream where particulate is warmer and, therefore, more likely to be softer, if not actually liquid. The wave intensity may be optimized in view of the desired removal, to have sufficient strength to cause desired agglomeration, while not being so strong as to cause undesired breakup of existing particulate. Exemplary intensity is at least about 0.3 pounds per square inch (2.1 kPa) differential (PSID) or 160db overpressure at extent of range (e.g., at an opposite duct surface (e.g., about 2.5-5m away) and/or at a location where the peak overpressure from another conduit is equal). Intensity at the conduit outlet will tend to be higher.

One or more embodiments of the present invention have been described. Nevertheless, it will be understood that various modifications may be made without departing from the scope of the invention. For example, when implemented in a reengineering or upgrade of an existing system configuration or system, details of the existing configuration may influence details of any particular implementation. Although illustrated with respect to a coal-burning plant, the invention applies to other heat transfer facilities that produce particulate. Some prime examples would be trash incinerators and biomass/wood burners. Trash incinerators may be particularly relevant due to the possible capture of a variety of toxic trace elements. Thus the plant fuel may be selected from the group consisting of coal, fuel oil, hydrocarbon gas biomass, trash, and combinations thereof. Accordingly, other embodiments are within the scope of the following claims.

## Claims

1. An apparatus comprising:
a combustor (26);
an exhaust flowpath extending from the combustor (26);
a particulate removal device (104) along the exhaust flowpath; and
a pulsed-combustion particle agglomeration system (120) along the exhaust flowpath between the combustor (26) and the removal device (104) and comprising:
a source of fuel and oxidizer;
a plurality of combustion conduits (124) coupled to the source to receive charges of said fuel and oxidizer; and
a plurality of ignitors coupled to the combustion conduits (124) to ignite the charges.

2. The apparatus of claim 1 wherein:
the combustor is a coal-burning furnace (26).

3. The apparatus of claim 2 further comprising:
pendant boiler tubes (64) receiving heat from combustion of the coal to heat steam in the tubes, the system (120) being downstream of the tubes (64) along the exhaust flowpath.

4. The apparatus of claim 3 further comprising:
an economizer (56) in the exhaust flowpath; and
an air heater (50) in the exhaust flowpath, the pulsed-combustion particle agglomeration system (120) being between the economizer (56) and the air heater (50).

5. The apparatus of claim 2, 3 or 4 further comprising:
a plurality of pulverizers (40) delivering pulverized coal to the furnace (26).

6. The apparatus of any preceding claim wherein:
said combustion conduits (124) have outlets aimed transverse to a downstream direction of the flowpath.

7. The apparatus of any preceding claim wherein:
at least four of said combustion conduits (124) are positioned at essentially a common streamwise location along the exhaust flowpath.

8. The apparatus of any preceding claim further comprising:
a smokestack (110) forming an outlet of the flowpath to atmosphere.

9. The apparatus of any preceding claim wherein the source comprises:
a first source (144) of said fuel, said fuel consisting in majority part, by mass, of fuel selected from the group consisting of hydrogen, hydrocarbon fuels, and their mixtures; and
a second source (146) of said oxidizer, said oxidizer consisting essentially of air.

10. The apparatus of any preceding claim wherein:
said combustion conduits (122) are configured to operate at a cycle frequency of at least 1.5Hz.

11. The apparatus of any preceding claim wherein:
there are at least six of said combustion conduits (122).

12. The apparatus of any preceding claim wherein:
there are at least four of said combustion conduits (122) positioned in two out-of-phase groups.

13. The apparatus of any preceding claim wherein:
said combustion conduits (122) have lengths of 0.5-4m and cross-sectional areas of 5-150cm².

14. An apparatus comprising:
a combustor (26);
an exhaust flowpath extending from the combustor (26);
a particulate removal device (104) along the exhaust flowpath; and
pulsed-combustion means (120) for encouraging particle agglomeration along the exhaust flowpath between the combustor (26) and the removal device (104).

15. The apparatus of any preceding claim wherein the combustor is a fossil fuel-burning furnace (26).

16. The apparatus of any preceding claim being a boiler system (20).

17. A method for operating a plant comprising:
burning a plant fuel and generating a flow containing particles;
passing the flow through a pulsed detonation particulate agglomerator (120) including cyclically:
introducing a fuel and oxidizer charge to at least one conduit (122);
initiating combustion of the charge; and
exposing the combustion products flow to shock waves generated by the pulsed detonation combustion causing agglomeration of the particles;
passing the flow through a particulate removal system (104); and
exhausting the flow.

18. The method of claim 17 wherein:
the plant fuel is selected from the group consisting of coal, fuel oil, hydrocarbon gas biomass, trash, and combinations thereof.

19. The method of claim 17 or 18 further comprising:
recirculating a portion of the flow.

20. The method of claim 17, 18 or 19 wherein:
the exposing comprises passing the flow past and exposing said flow to said shock waves from a plurality of said conduits (122).

21. The method of any of claims 17 to 20 wherein:
the exposing comprises passing the flow between opposed outlets (126) of one or more pairs of said conduits (122).

22. The method of any of claims 17 to 21 wherein:
the agglomeration enhances mass extraction by the particulate removal system (104).

23. The method of any of claims 17 to 22 wherein:
the charge comprises hydrogen as a by weight majority of the fuel.

24. The method of any of claims 17 to 23 wherein:
the at least one conduit (122) is operated with an air purge before each charge introduction.

25. The method of any of claims 17 to 24 wherein:
the at least one conduit (122) is operated at a cycle frequency of at least 1.5Hz.
